(19) Europäisches Patentamt
European Patent Office
Office européen des brevets

(11) Veröffentlichungsnummer: **0 191 890 B1**

# (12) EUROPÄISCHE PATENTSCHRIFT

(45) Veröffentlichungstag der Patentschrift: **06.11.91**

(51) Int. Cl.⁵: **H04J 3/06**

(21) Anmeldenummer: **85106000.4**

(22) Anmeldetag: **15.05.85**

(54) **Anordnung zur Dekodierung von Kodewörtern.**

(30) Priorität: **20.02.85 CH 770/85**

(43) Veröffentlichungstag der Anmeldung:
**27.08.86 Patentblatt 86/35**

(45) Bekanntmachung des Hinweises auf die
Patenterteilung:
**06.11.91 Patentblatt 91/45**

(84) Benannte Vertragsstaaten:
**AT CH DE LI**

(56) Entgegenhaltungen:
**US-A- 4 298 987**
**US-A- 4 301 534**

**PATENT ABSTRACTS OF JAPAN, Band 7, Nr. 247 (E-208)[1392], 2 November 1983; & JP-A-58 136 150**

(73) Patentinhaber: **SIEMENS-ALBIS AKTIENGE-SELLSCHAFT**
**PV/Patente und Verträge Postfach**
**CH-8047 Zürich(CH)**

(72) Erfinder: **Hagger, Hansjost, Dr.**
**Tulpenstrasse 376**
**CH-5212 Hausen(CH)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Beschreibung

Die vorliegende Erfindung betrifft eine Anordnung zur Dekodierung von Kodewörtern gemäss dem Oberbegriff des Patentanspruches 1.

Bei der digitalen Uebertragung eines quasistatistisch verteilten Bitstroms werden manchmal zu Steuerzwecken Kodewörter periodisch eingeblendet. Ein solches Kodewort ist beispielsweise das Synchronwort in einem rahmenstrukturierten Uebertragungsverfahren.

Zur Ueberwachung eines einzigen oder einer kleinen Anzahl von vorbestimmten Kodewörtern verwendet man mit Vorteil rückgekoppelte Schieberegister, welche beim Empfang eines der erwarteten Kodewörter jeweils ein vorbestimmtes Meldesignal abgeben. Soll jedoch eine grosse Anzahl von Kodewörtern selektiv detektiert werden, so ist der Aufwand mit rückgekoppelten Schieberegistern zu gross.

Der Erfindung liegt daher die Aufgabe zugrunde, eine Anordnung der eingangs genannten Art zu schaffen, welche weniger aufwendig ist.

Diese Aufgabe wird erfindungsgemäss mit einer Anordnung gelöst, deren Merkmale aus dem kennzeichnenden Teil des Patentanspruchs 1 hervorgehen. Vorteilhafte Ausgestaltungen der Erfindung ergeben sich aus den weiteren Ansprüchen.

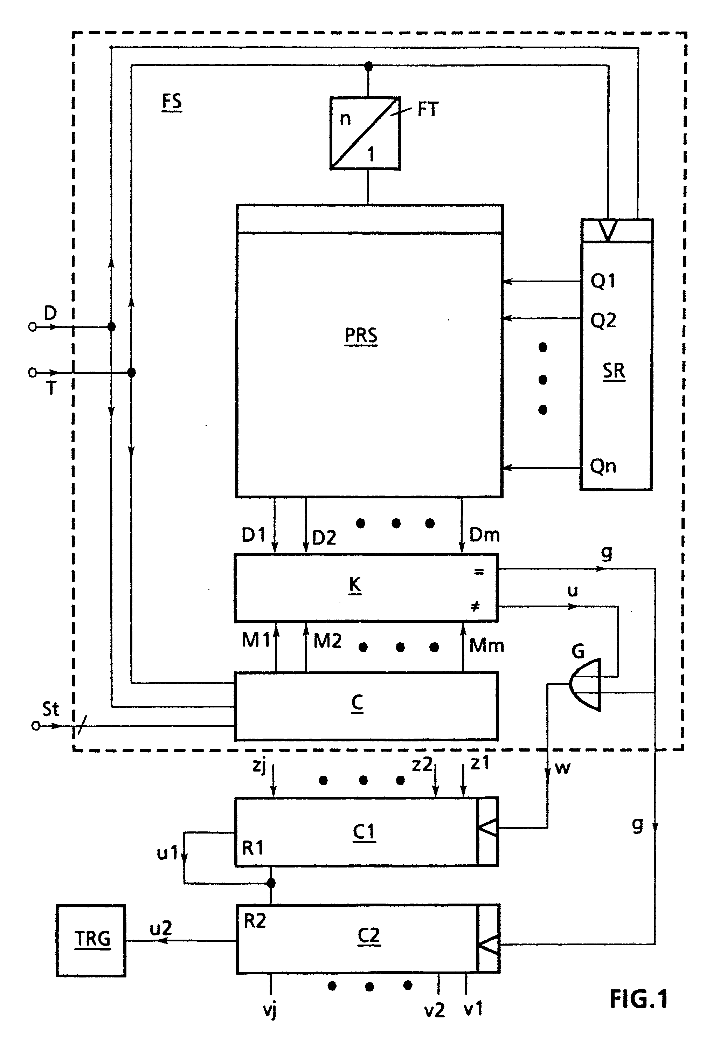

Die Erfindung wird nachfolgend durch Beschreibung von Ausführungsbeispielen anhand einer Zeichnung (Fig. 1) näher erläutert. Diese zeigt das Blockschaltbild einer erfindungsgemässen Anordnung.

Diese Anordnung umfasst eine Filterschaltung FS mit einer Festwertspeicherschaltung PRS, die eingangsseitig mit den Parallelausgängen Q1, Q2, .... Qn eines Schieberegisters SR und ausgangsseitig mit den Dateneingängen D1, D2, .... Dm eines Komparators K verbunden ist, der über weitere Eingänge M1, M2, .... Mm an die Parallelausgänge eines Rechners oder Computers C angeschlossen ist.

Das Schieberegister SR wird eingangsseitig mit einem Datensignal D und andererseits mit einem Taktsignal T beaufschlagt, das über einen Frequenzteiler FT auch dem Takteingang der Festwertspeicherschaltung PRS zugeführt wird. Die Anordnung umfasst zudem einen Zähler C1, dessen Takteingang mit dem Ausgang eines ODER-Gatters G verbunden ist, das zwei Ausgangssignale des Komparators K verknüpft, nämlich ein Koinzidenzsignal g = "1", wenn D1 = M1 und D2 = M2 und .... Dm = Mm, und ein Meldesignal u = "1" in den anderen Fällen. Dabei wird das Signal g dem Takteingang eines zweiten Zählers C2 und das Ausgangssignal u1 des Zählers C1 den Rückstelleingängen R1 und R2 der Zähler C1 bzw. C2 zugeführt. Das Ausgangssignal u2 des zweiten Zählers C2 dient zur Steuerung einer Triggerschaltung TRG.

Die Anordnung funktioniert folgendermassen:
Ein Bitstrom D mit der Taktfrequenz f wird wortweise durch das n-stufige Schieberegister SR geschoben. Mit der Taktfrequenz f/n werden n aufeinanderfolgende Pulse periodisch an den parallelen Ausgängen Q1, Q2 .... Qn abgenommen und jeweils als Adresse in der Festwertspeicherschaltung PRS verwendet. Vorzugsweise kann ein programmierbarer Speicher verwendet werden, bei dem ein Auswählpuls diejenige Speicherzelle ausliest, welche im Moment des Auftretens des Auswählpulses adressiert wird.

Die Festwertspeicherschaltung PRS ist derart programmiert, dass ihre m Datenausgänge ein bestimmtes Bitmuster abgeben, wenn als Adresse das zugehörige Kodewort oder eine seiner (n-1) zyklischen Vertauschungen anliegen. So sind beispielsweise die 7 Wörter 1011 1111, 1101 1111, 1110 1111, 1111 0111, .... 1111 1110 zyklische Vertauschungen des Kodewortes 0111 1111. Auf diese Weise erscheint an den m Datenausgängen der programmierbaren Schaltung PRS im Takte f/n ein für das im Bitstrom enthaltene Kodewort charakteristisches Muster, wobei die Zahl m abhängig von der Anzahl der zu detektierenden Kodewörter ist. Um eine eindeutige Detektion der Kodewörter in einem quasistatischen Bitstrom zu ermöglichen, werden somit bei einem n-Bit langen Kodewort aus den $2^n$ Möglichkeiten diejenigen Bitmuster ausgewählt, welche auch in allen ihren zyklischen Vertauschungen eindeutig bleiben. In diesem Falle ist eine Feststellung des Anfanges oder des Endes eines Kodewortes nicht erforderlich, weil das Kodewort durch n aufeinanderfolgende Bits eindeutig bestimmt ist.

In der Schaltung PRS werden alle n Eingangsbits gleichzeitig erfasst, wobei der Inhalt der n Adressen der Schaltung PRS auf ein und dieselbe Ausgangskombination an den m Ausgängen führen. Vorzugsweise gilt die Beziehung n > m, aber auch die Bedingung m ≧ n ist möglich.

Ein Vorteil dieses Prinzips besteht darin, dass die Detektionsvorrichtung nicht auf das im Bitstrom enthaltene Kodewort synchronisiert werden muss, was insbesondere bei einer grösseren Anzahl von Kodewörtern aufwendig ist. Die programmierbare Schaltung PRS hat ausserdem den Vorteil, dass das an ihren Datenausgängen abgegebene charakteristische Muster unabhängig vom Kodewort gewählt werden kann, was eine Interpretation für eine nachfolgende Schaltung vereinfachen kann.

Der Ausgang der Festwertspeicherschaltung PRS liefert somit periodisch ein Bitmuster an den ersten Eingang des Komparators K. Der Rechner C erzeugt Referenzmuster-Signale, die periodisch mit der Taktfrequenz f/n dem zweiten Eingang des Komparators K zugeführt werden, wobei der Rechner C mit den Signalen D und/oder T und/oder anderen Steuersignale St gesteuert werden kann. Bei Uebereinstimmung der Bitmuster-Signale an den Eingängen D1, D2, .... Dm mit den Referenzmuster-Signalen an den Eingängen M1, M2, .... Mm gibt der Komparator K das Koinzidenzsignal g ab, das gegebenenfalls direkt der Triggerschaltung TRG zugeführt werden kann; in einem solchen Fall können die Zähler C1 und C2 sowie das Gatter G entfallen.

Da im allgemeinen jedoch der Bitstrom D nicht völlig fehlerfrei ist, kann die zusätzliche Forderung aufgestellt werden, dass in einer bestimmten Zeitperiode eine Anzahl k identischer Kodewörter detektiert werden muss, um das Kodewort als gültig zu erklären. Für einen solchen Fall sind die Elemente C1, C2 und G vorgesehen. Zu diesem Zweck wird auch das Meldesignal u verwendet, das immer dann abgegeben wird, wenn das Bitmuster nicht mit dem Referenzmuster übereinstimmt.

Durch die ODER-Verknüpfung G wird für jedes empfangene Bitmuster je ein Puls in den Zähler C1 eingegeben, so dass das Ausgangssignal w des Gatters G ein Zählsignal für jedes empfangene Datenwort darstellt. Somit zählt der Zähler C 1 alle dem Komparator K in einer bestimmten Zeitperiode zugeführten Bitmuster, während der Zähler C2 nur die mit dem Referenzmuster übereinstimmenden Bitmuster zählt. Nach einer vorgegebenen Anzahl Pulse (Messperiode) stellt der Zähler C1 den Zähler 2 und damit die Triggerschaltung TRG zurück.

Die mit dem Referenzmuster übereinstimmenden Bitmuster werden im zweiten Zähler C2 gezählt. Nach Empfang der vorgeschriebenen Anzahl k erfolgt ein Ueberlauf des Zählers C2. Dadurch wird die Triggerschaltung TRG aktiviert und das Kodewort für gültig erklärt, wenn nicht vorher durch den Ueberlauf des Zählers C1 eine Rückstellung und damit eine Ungültigkeitserklärung des Kodewortes erfolgt ist. Nach Ablauf der Messperiode beginnt der Vorgang von Neuem. Die Zähler C1 und C2 weisen verschiedene Steuereingänge $z_1$, $z_2$, .... $z_j$ bzw. $v_1$, $v_2$, .... $v_j$ auf, die zur Bestimmung der Messperiode dienen.

## Patentansprüche

1. Anordnung zur Dekodierung von Kodewörtern, die periodisch in einen Bitstrom eingeblendet werden, **dadurch gekennzeichnet, dass,** um die Kodewörter von den übrigen Datenwörtern im Bitstrom zu unterscheiden, eine Filterschaltung (FS) vorhanden ist, die auf jede zyklische Vertauschung der Bitstellen ein und desselben Kodewortes anspricht und daraufhin ein Koinzidenzsignal (g) abgibt.

2. Anordnung nach Anspruch 1, **dadurch gekennzeichnet,** dass die Filterschaltung (FS) eine Festwertspeicherschaltung (PRS) aufweist, die eingangsseitig mit den Parallelausgängen (Q1, Q2, .... Qn) eines Schieberegisters (SR) und ausgangsseitig mit den Dateneingängen (D1, D2, .... Dm) eines Komparators (K) verbunden ist, der über weitere Eingänge (M1, M2, .... Mm) an die Parallelausgänge eines Rechners (C) angeschlossen ist und das Koinzidenzsignal (g) abgibt, und dass das Schieberegister (SR) eingangsseitig mit einem Datensignal (D) und andererseits mit einem Taktsignal (T) beaufschlagt wird, das über einen Frequenzteiler (FT) auch dem Takteingang der Festwertspeicherschaltung (PRS) zugeführt wird.

3. Anordnung nach Anspruch 1 oder 2, **dadurch gekennzeichnet,** dass die Filterschaltung (FS) ebenfalls ein Zählsignal (w) für jedes empfangene Datenwort abgibt, und dass die Anordnung einen ersten Zähler (C1), dessen Takteingang das Zählsignal (w) zugeführt wird, und einen zweiten Zähler (C2), dessen Takteingang mit dem Koinzidenzsignal (g) beaufschlagt ist, aufweist, wobei das Ausgangssignal (u1) des ersten Zählers (C1) die Rückstelleingänge (R1 und R2) beider Zähler (C1 bzw. C2) steuert, und dass das Ausgangssignal (u2) des zweiten Zählen (C2) zur Steuerung einer Triggerschaltung (TRG) dient.

## Claims

1. An arrangement for decoding code words, which are inserted periodically into a bit stream, characterised in that in order to distinguish the code words from the remaining data words in the bit stream, a filter circuit (FS) is present, which responds to one and the same code word with each cyclic permutation of the bit positions and as a result delivers a coincidence signal (g).

2. An arrangement according to claim 1, characterised in that the filter circuit (FS) has a fixed value memory circuit (PRS), which is connected on the input side to the parallel outputs (Q1, Q2, ... Qn) of a shift register (SR) and on the output side to the data inputs (D1, D2, ... Dm) of a comparator (K), which is connected by way of further inputs (M1, M2,... Mn) to the parallel outputs of a computer (C) and delivers the coincidence signal (g), and in that on the input side, the shift register (SR) is acted upon by a data signal (D) and, on the other hand, by a clock signal (T), which is also supplied, by way of a frequency divider (FT), to the clock input of the fixed value memory circuit (PRS).

3. An arrangement according to claim 1 or 2, characterised in that the filter circuit (FS) also delivers a counting signal (w) for each received data word and in that the arrangement has a first counter (C1), the clock input of which is supplied with the count signal (w), and a second counter (C2), the clock input of which is acted upon by the coincidence signal (g), wherein the output signal (u1) of the first counter (C1) controls the reset inputs (R1 and R2) of both counters (C1 and C2), and in that the output signal (u2) of the second counter (C2) serves to control a trigger circuit (TRG).

**Revendications**

1. Dispositif pour le décodage de mots de code qui sont introduits périodiquement dans un flux binaire, caractérisé par le fait que pour distinguer, dans le flux binaire, les mots de code des autres mots de données, il est prévu un circuit constituant un filtre (FS) qui répond à chaque inversion cyclique des chiffres binaires d'un seul et même mot de code et qui émet, en réponse, un signal de coïncidence (g).

2. Dispositif selon la revendication 1, caractérisé par le fait que le circuit (FS) formant filtre comporte un circuit (PRS) constituant une mémoire morte qui est reliée, côté entrée, avec les sorties parallèles (Q1, Q2, ... Qn) d'un registre à décalage (SR) et, côté sortie, aux entrées de données (D1, D2, ... Dm) d'un comparateur (K) qui, par l'intermédiaire d'autres entrées (M1, M2, ... Mm) est relié aux sorties parallèles d'un calculateur ou ordinateur (C) et émet le signal de coïncidence (g) et que le registre à décalage (SR) est chargé, côté entrée, avec un signal de données (D) et, d'autre part, avec un signal de cadence (T) qui est appliqué, par l'intermédiaire d'un diviseur de fréquence (FT), également à l'entrée de cadence du circuit (PRS) formant mémoire morte.

3. Dispositif selon la revendication 1 ou 2, caractérisé par le fait que le circuit (FS) formant filtre émet également un signal de comptage (w) pour chaque mot de donnée reçu, et que le dispositif comporte un premier compteur (C1) dont l'entrée de cadence reçoit le signal de comptage (w) et un second compteur (C2), dont l'entrée de cadence reçoit le signal de coïncidence (g), étant noté que le signal de sortie (u1) du premier compteur (C1) commande les entrées de remise à l'état initial (R1 et R2) des deux compteurs (C1, C2), et que le signal de sortie (u2) du second compteur (C2) sert à commander un circuit de déclenchement (TRG).

EP 0 191 890 B1

FIG.1